# FASCICULE DE BREVET EUROPEEN

(11) **EP 1 614 623 B1**
(45) Date de publication et mention de la délivrance du brevet: **06.09.2006**
(21) Numéro de dépôt: 05300537.7
(22) Date de dépôt: 30.06.2005
(51) Int. Cl.: B64C 1/14

(54) **Porte pour aéronef, et aéronef muni d'au moins une telle porte**
Flugzeugtür und ein Flugzeug mit einer solchen Tür
Aircraft door and an aircraft with such a door

(30) Priorité: 09.07.2004 FR 0451485
(43) Date de publication de la demande: 11.01.2006
(73) Titulaire: AIRBUS France, 31060 Toulouse (FR)
(72) Inventeur: Baderspach, Jérôme, 31860, Labarthe sur Leze (FR); Rondot, Sébastien, 44600, Saint Nazaire (FR)
(74) Mandataire: Camus, Olivier Jean-Claude

(56) Documents cités:
- EP-A- 0 876 954
- CH-A5- 664 333
- DE-A1- 3 346 976
- DE-C1- 19 732 514
- GB-A- 534 761
- GB-A- 1 213 503
- US-A- 2 942 811

## Description

L'invention appartient au domaine de l'aéronautique. L'invention trouve plus particulièrement des applications dans le domaine des aéronefs militaires. L'invention peut également trouver des applications dans le domaine des aéronefs civils. L'invention a pour objet une porte apte à obturer une ouverture ménagée sur un fuselage d'un aéronef. Plus précisément, l'invention a pour objet une porte pouvant avoir au moins deux configurations stables différentes en position fermée. L'invention a également pour objet un aéronef comportant au moins une telle porte.

Un but de l'invention est de fournir une porte apte par exemple à permettre une évacuation de passagers et/ou d'un équipage, lorsque la porte est en position ouverte, et apte, en position fermée, à fournir par exemple un poste d'observation protubérant sur le fuselage ou au contraire une surface lisse, dépourvue de traînée aérodynamique, selon des besoins. Un but supplémentaire de l'invention est de faciliter une interchangeabilité entre des fonctions possibles de la porte, annexes à la fonction d'obturation.

Un aéronef est généralement formé d'un fuselage et d'une voilure solidaire du fuselage. Le fuselage, ou corps de l'aéronef, comporte au moins une porte, ou trappe, permettant une communication entre l'extérieur et l'intérieur du fuselage.

On connaît, comme exemple de porte, une porte munie d'un cadre solidaire du fuselage et d'un battant apte à être articulé sur le cadre. Dans une position ouverte, le battant est éloigné du cadre, et dégage ainsi un accès au fuselage. Dans une position fermée, le battant est appliqué contre le cadre, de manière à obturer l'accès au fuselage. Le battant présente une surface externe lisse, permettant d'optimiser un profil aérodynamique du fuselage et éviter les traînées aérodynamiques. Par surface externe du battant, on entend face du battant dirigée vers l'extérieur de l'aéronef.

Généralement une telle porte sert de porte de communication usuelle, c'est-à-dire utilisée pour l'embarquement des passagers et/ou de l'équipage, ou de porte de secours, utilisée en cas d'évacuation d'urgence. La porte peut être munie d'un hublot. Le hublot permet à un passager une observation limitée de ce qu'il se passe à l'extérieur de l'aéronef. En effet, le champ d'observation au travers du hublot ne permet pas de voir ce qu'il se passe sur les côtés et vers le haut et/ou le bas de l'aéronef.

Il est connu, notamment dans le domaine des aéronefs militaires, de munir le fuselage d'un poste d'observation permettant de voir les alentours de l'aéronef sur 360°, ainsi que vers le haut. Par exemple, on munit une paroi externe du fuselage d'un dôme en matériau transparent. Le dôme est situé par exemple sur une partie avant supérieure du fuselage, et recouvre un orifice ménagé sur la paroi du fuselage. Une personne peut, depuis l'intérieur du fuselage, pénétrer dans un volume interne du dôme et observer l'extérieur. Par volume interne du dôme, on entend le volume ménagé entre la paroi du dôme et la paroi du fuselage, le dôme formant une protubérance sur ladite paroi. Un tel dôme est monté fixe sur le fuselage. Le dôme formant une protubérance sur le fuselage, il augmente la surface de l'aéronef sur laquelle peuvent s'exercer les forces d'arrachement lorsque l'aéronef est en vol. Une traînée aérodynamique se crée à l'endroit du dôme, diminuant des performances cinétiques de l'aéronef, ainsi que la stabilité dudit aéronef.

Ce dôme d'observation peut par ailleurs être préjudiciable dans le cas d'un aéronef militaire se trouvant confronté à des tirs ennemis. En effet, du fait qu'il forme une protubérance sur le fuselage, le dôme est une cible voyante et facile pour les tirs ennemis. De plus, le matériau utilisé est généralement un matériau léger, afin de ne pas augmenter de façon trop importante un poids total de l'aéronef. Ce matériau est souvent plus fragile que les matériaux utilisés pour fabriquer l'aéronef en lui même, à savoir le fuselage, la voilure, le carénage, etc. Un impact, par exemple de balle, dans le dôme peut donc endommager irrémédiablement l'aéronef, en autorisant une dépressurisation de l'intérieur dudit aéronef par un trou formé par la balle dans le dôme.

De plus, le dôme ne peut pas être disposé n'importe où sur le fuselage. En effet, il faut tenir compte de son encombrement. Il faut notamment le positionner à distance suffisante des portes de l'aéronef. Par distance suffisante, on entend une distance permettant un débattement de la porte, afin qu'elle puisse être ouverte et fermée sans être gênée par le dôme.

Par ailleurs, actuellement, la paroi externe du fuselage des aéronefs militaires est de plus en plus souvent munie de dispositifs spécifiques, tels que des caméras, des armes, des GPS ou autres, lesdits dispositifs pouvant être commandés depuis l'intérieur du fuselage. Ces dispositifs augmentent l'encombrement général externe sur la paroi du fuselage. Une répartition de ces dispositifs sur la surface du fuselage dépend alors de la surface encore libre sur la paroi externe du fuselage, et notamment du nombre de portes et de leurs emplacements.

Dans l'invention, on cherche à résoudre les problèmes exposés ci-dessus en proposant une porte apte, d'une part, à obturer un passage entre l'intérieur et l'extérieur de l'aéronef et pouvant, d'autre part, de par sa structure particulière, remplir une ou plusieurs autres fonctions.

Pour cela, la porte de l'invention est montée en rotation autour de deux axes de rotation indépendants. Un premier axe de rotation est situé à l'endroit d'une liaison entre des articulations de la porte et le fuselage. Les articulations sont solidaires du fuselage et de la porte, et solidarisent ainsi la porte au fuselage. Le premier axe de rotation autorise un débattement de la porte afin que ladite porte puisse passer depuis une position ouverte jusqu'à une position fermée, ou inversement, selon les besoins. Un deuxième axe de rotation est situé à l'endroit d'une liaison entre les articulations de la porte et la porte elle-même. Ainsi, la porte peut tourner autour des articulations, de manière à pouvoir appliquer tours à tours différentes faces contre la paroi du fuselage.

La porte peut comporter des moyens de blocage de la rotation de la porte autour des articulations. On interdit ainsi la rotation de la porte autour du deuxième axe, lorsque ladite porte est dans une configuration souhaitée.

Chaque face de la porte peut être munie d'un appareillage particulier, comme un dôme d'observation, une caméra, une plaque lisse, etc. Selon les besoins, un utilisateur expose une face plutôt qu'une autre à l'extérieur de l'aéronef.

L'invention a donc pour objet une porte pour aéronef, apte à obturer une ouverture ménagée sur un fuselage de l'aéronef, la porte comportant un encadrement relié au fuselage par des moyens d'articulation, caractérisée en ce que l'encadrement est monté en rotation sur les moyens d'articulation.

Selon des exemples de réalisation particuliers de l'invention, la porte peut également comporter des caractéristiques supplémentaires parmi les caractéristiques suivantes :
- la porte est apte à prendre deux positions stables opposées, par rotation de 180° autour des moyens d'articulation ;
- la porte comporte des moyens de verrouillage de l'encadrement, dans l'une ou l'autre des positions stables ;
- une première face de l'encadrement est munie d'un dôme d'observation, une deuxième face comportant un orifice d'accès au dôme ;
- la porte comporte des moyens d'obturation de l'orifice d'accès sur la deuxième face ;
- les moyens d'obturation comportent au moins une glissière ménagée sur l'encadrement à l'endroit de la deuxième face dudit encadrement et une plaque apte à coulisser dans la glissière ;
- le dôme est amovible ;
- la porte obture une ouverture ménagée à l'endroit d'un cockpit de l'aéronef ;
- les moyens d'articulation comportent des charnières extérieures ;
- les moyens d'articulation comportent des charnières intérieures.

L'invention concerne aussi un aéronef caractérisé en ce qu'il comporte au moins une porte telle que décrite précédemment.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : une porte selon un exemple de réalisation de l'invention,
- Figure 2 : la porte de la figure 1 dans une position stable.

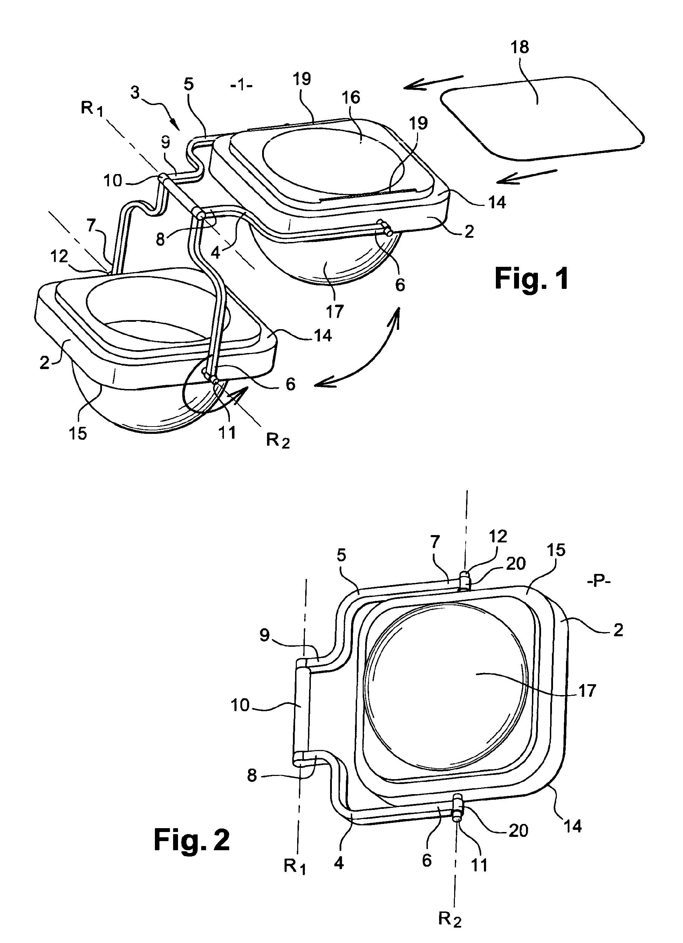

Sur la figure 1 est représenté un exemple de porte 1 de l'invention. La porte 1 peut avoir plusieurs configurations différentes du fait de son articulation autour de deux axes de rotation différents et indépendants l'un de l'autre, respectivement R1 et R2.

La figure 1 montre donc la porte 1 dans deux positions différentes. Plus précisément la figure 1 montre la porte 1 dans deux positions possibles par rapport à l'axe de rotation R1 et deux positions possibles par rapport à l'axe de rotation R2. Il faut cependant noter que la rotation autour de l'axe de rotation R2 peut n'être autorisée que lorsque la porte 1 est dans une configuration appropriée par rapport à l'axe de rotation R1.

La porte 1 comporte un encadrement 2 destiné à être accolé contre une paroi d'un fuselage d'un aéronef (non représentés), à l'endroit d'une ouverture pratiquée sur ladite paroi. L'encadrement 2 est relié au fuselage par l'intermédiaire de moyens d'articulation 3.

Dans l'exemple représenté sur la figure 1, les moyens d'articulation 3 comportent deux bras d'articulation 4 et 5. Le bras d'articulation 4 est muni d'une première extrémité 6, solidaire de l'encadrement 2, et d'une deuxième extrémité 8, solidaire d'une charnière 10. La charnière 10 est fixée sur la paroi du fuselage. De même, le bras d'articulation 5 est muni d'une première extrémité 7, solidaire de l'encadrement 2, et d'une deuxième extrémité 9, solidaire d'une charnière 10. La deuxième extrémité 8 du bras d'articulation 4 et la deuxième extrémité 9 du bras d'articulation 5 sont montées en rotation sur la charnière 10. Ainsi, la porte 1 peut être basculée autour de l'axe de rotation R1 passant par la charnière 10.

Dans un autre exemple de réalisation de l'invention, on peut prévoir que les moyens d'articulation 3 comportent deux bras d'articulation 4 et 5, chaque bras d'articulation 4 et 5 étant relié par sa deuxième extrémité, respectivement 8 et 9, à une charnière solidaire de la paroi du fuselage. L'axe de rotation R1 passe alors par les deux charnières. Il est également possible de prévoir un unique bras d'articulation et une unique charnière.

L'axe de rotation R1 permet à la porte 1 de passer d'une position ouverte à une position fermée, et inversement. La position ouverte correspond à une position de la porte 1 éloignée de la paroi du fuselage. Ainsi, il est possible de passer depuis l'intérieur de l'aéronef jusqu'à l'extérieur, par l'ouverture ménagée sur la paroi du fuselage. La position fermée de la porte 1 correspond à une position dans laquelle la porte 1 obture l'ouverture pratiquée sur le fuselage. L'encadrement 2 est alors appliqué contre la paroi du fuselage.

Lorsque la porte 1 est fixée par l'intermédiaire de la charnière 10 sur la paroi du fuselage, elle peut avoir, par exemple, un débattement de 180° correspondant à une rotation de 180° de la porte 1 autour de l'axe de rotation R1, permettant l'ouverture et/ou la fermeture de la porte 1. Bien entendu, il est possible d'autoriser un débattement moins important, par exemple un débattement de 90°, afin que la porte 1, en position ouverte, ne s'écarte que de 90° de la paroi du fuselage.

Chaque première extrémité 6 ou 7 de chaque bras d'articulation 4 ou 5 est montée en rotation sur l'encadrement 2 de la porte 1. Ainsi, par exemple, la première extrémité 6 du bras d'articulation 4 est reliée à l'encadrement 2 par un premier pivot 11, tandis que la première extrémité 7 du bras d'articulation 5 est reliée à l'encadrement 2 par un second pivot 12. Les pivots 11 et 12 sont diamétralement opposés sur l'encadrement 2. Cependant, il est possible de positionner différemment les pivots 11 et 12, dans la mesure où leurs positions autorisent une rotation de la porte 1. Le deuxième axe de rotation R2 passe par le premier pivot 11 et le second pivot 12. L'encadrement 2 de la porte 1 peut tourner librement autour de l'axe de rotation R2. Il est possible d'autoriser une rotation de 360° autour de l'axe de rotation R2. Dans l'invention, on prévoit au moins deux positions stables de l'encadrement 2 autour de l'axe de rotation R2.

Selon des besoins, on fait tourner l'encadrement 2 autour de l'axe de rotation R2, afin que ledit encadrement 2 présente, par exemple, une première face 14 ou une deuxième face 15 en direction de la paroi externe, ou interne, du fuselage. Ainsi, dans l'exemple représenté, il est possible d'obturer l'ouverture ménagée sur la paroi du fuselage par la première face 14 de l'encadrement 2 ou par la deuxième face dudit encadrement 2.

Si l'encadrement 2 est muni de deux faces 14 et 15 susceptibles d'être utilisées pour obturer l'ouverture ménagée sur la paroi du fuselage, on peut munir la porte 1 de moyens de verrouillage de l'encadrement 2 dans l'une ou l'autre de ces deux configurations, afin de les rendre stables. Par exemple, il est possible de prévoir des bagues de serrage 20 (figure 2) autour des extrémités 6 et 7 des bras d'articulation 4 et 5 à l'endroit de leur liaison avec les pivots 11 et 12. Lorsqu'on souhaite modifier la configuration de l'encadrement 2, on retire les bagues de serrage 20, de manière à rendre libre en rotation les extrémités 6 et 7 autour des pivots 11 et 12. On fait basculer l'encadrement 2 autour de l'axe de rotation R2. Une fois la position de l'encadrement 2 souhaitée obtenue, on resserre les bagues de serrage 20 autour des extrémités 6 et 7, à l'endroit des pivots 11 et 12, de manière à interdire par la suite tout mouvement de rotation.

Dans d'autres exemples de réalisation de l'invention, il est possible d'utiliser des moyens de verrouillage différents de l'encadrement 2. Par exemple, on peut prévoir de munir la porte 1 de clavettes aptes à être insérées dans des orifices ménagés sur les bras d'articulation 4 et 5 à l'endroit de la liaison entre lesdits bras d'articulation 4 et 5 et les pivots 11 et 12.

Afin de faire tourner l'encadrement 2 autour de l'axe de rotation R2, il peut être nécessaire de faire préalablement pivoter la porte 1 autour de l'axe de rotation R1, afin d'éloigner la porte 1 de la paroi du fuselage, et d'éviter ainsi que ladite paroi gêne la rotation de l'encadrement 2 autour de l'axe R2.

Dans un exemple particulier de réalisation de l'invention, on prévoit d'autoriser une rotation de 180° de l'encadrement 2 autour de l'axe de rotation R2, afin que l'encadrement 2 puisse appliquer la première face 14 ou la deuxième face 15 contre la paroi du fuselage. Il est également possible d'autoriser une rotation de 360° autour de l'axe de rotation R2. Une telle liberté de rotation peut être utile lorsque l'encadrement 2 est muni par exemple de quatre faces aptes à obstruer l'ouverture pratiquée sur la paroi du fuselage. En effet, dans ce cas, où l'encadrement 2 a une forme générale en croix, la rotation de 360° permet d'appliquer tours à tours les quatre faces de la croix contre la paroi du fuselage.

Comme on le verra ci-dessous chaque face 14, 15 de l'encadrement 2 peut être munie d'un dispositif d'obturation différent.

Dans l'exemple représenté à la figure 1, l'encadrement 2 est muni d'un évidement central 16 apte à recevoir un dispositif d'obturation. Chaque face 14 ou 15 de l'encadrement 2 peut recevoir simultanément, ou successivement, des dispositifs d'obturation.

Ainsi, sur la figure 1, la seconde face 15 de l'encadrement 2 est munie d'un dispositif d'observation 17 formé par exemple par un dôme en matière transparente. Le dôme 17 peut être amovible. Par exemple, le dôme 17 est muni d'un pas de vis sur une surface externe, le pas de vis pouvant coopérer avec un pas de vis ménagé sur une paroi interne de l'encadrement 2 bordant l'évidement 16. Le dôme 17 peut ainsi être retiré par dévissage et remplacé par un autre dispositif d'obturation. Il est également possible de solidariser le dôme 17 sur la face 15 de l'encadrement 2 par soudure ou tout autre moyen de fixation irréversible.

Le dôme 17, lorsqu'il est situé à l'extérieur du fuselage, peut fournir un poste d'observation de ce qu'il se passe à l'extérieur de l'aéronef depuis l'intérieur dudit aéronef. Sur la figure 2, la première face 14 de l'encadrement 2 repose sur la paroi externe P du fuselage.

Le dôme 17 est situé à l'extérieur du fuselage. Bien entendu, afin qu'une observation à travers le dôme 17 soit possible, la première face 14 est dépourvue de dispositif d'obturation de l'évidement 16. Dans un autre exemple de réalisation, on peut prévoir que la charnière 10 est une charnière interne, c'est-à-dire solidaire d'une paroi interne du fuselage. Afin que le dôme 17 ressorte du fuselage, c'est la face 15 de l'encadrement 2 qui doit être appliquée contre la paroi interne du fuselage bordant l'ouverture.

Le dôme 17 a, par exemple, un diamètre de 60 cm. Le dôme 17 dépasse donc, au maximum, de 30 cm au dessus d'une surface plane représentée par la paroi externe P du fuselage. Il est possible de prévoir un dôme 17 plus grand ou plus petit, selon les utilisations que l'on souhaite faire dudit dôme 17. En effet, selon que le dôme 17 est prévu sur un aéronef militaire ou un aéronef civil, et selon qu'on prévoit qu'il puisse permettre à une seule personne ou à tout un groupe de personnes d'observer les alentours, il est possible d'adapter la forme du dôme.

Il est possible de munir la première face 14 d'un dispositif d'obstruction 18, tel par exemple qu'une plaque en tôle, capable d'obturer l'évidement central 16. Par exemple, la face 14 de l'encadrement 2 est munie de glissières 19 dans lesquelles la plaque 18 peut coulisser. Lorsque la plaque 18 est fixée sur la face 14 de l'encadrement 2, ladite face 14 présente un aspect lisse.

Un utilisateur peut souhaiter rentrer le dôme 17 à l'intérieur du fuselage. Il fait alors pivoter de 180° l'encadrement 2 autour de l'axe de rotation R2, de manière à ce que la face 14 de l'encadrement 2 soit dirigée à l'extérieur de l'aéronef. La face 14 étant munie de la plaque 18, la surface de la paroi externe P du fuselage est parfaitement lisse à l'endroit de la porte 1. Le dôme 17 étant rentré à l'intérieur du fuselage, il est absolument indétectable depuis l'extérieur dudit aéronef.

Il n'est plus possible alors d'observer ce qu'il se passe à l'extérieur de l'aéronef. Dans un autre exemple, et afin de pouvoir continuer d'observer l'extérieur de l'aéronef à travers l'évidement 16, il est possible de munir la face 14 de l'encadrement 2 d'une plaque 18 en matériau transparent, tel que du verre ou du Plexiglas.

Bien entendu, la transition entre la configuration de la porte 1 pour laquelle le dôme 17 est hors de l'aéronef, et la configuration pour laquelle ledit dôme 17 est à l'intérieur de l'aéronef se fait au sol.

Dans un autre exemple de réalisation de l'invention, il est possible de munir les faces 14 et 15 de l'encadrement 2 de dispositifs d'obturation différents comme par exemple une caméra, un GPS etc. D'une manière générale, quels que soient les dispositifs dont la porte 1 est munie, le problème d'encombrement sur la paroi du fuselage est résolu, puisque la porte et les dispositifs sont superposés.

Par ailleurs, tous les dispositifs d'obturation peuvent être montés sur l'encadrement 2 de manière amovible, par coulissement dans des glissières, ou par vissage, ou autre. L'encadrement 2 de l'invention présente donc une grande interchangeabilité et peut s'adapter à tout type d'aéronef et à tout besoin.

Dans un exemple particulier de réalisation de l'invention, la porte 1 de l'invention est montée à l'endroit d'un cockpit de l'aéronef. Le cockpit est une partie avant de l'aéronef à l'endroit de laquelle peut être situé au moins un pilote. Le cockpit est généralement une partie à ciel ouvert de l'aéronef, c'est-à-dire pourvue d'une paroi transparente en Plexiglas, permettant au pilote de voir l'extérieur de l'aéronef. La porte 1 permet de fournir une issue de secours au pilote, ainsi qu'un moyen d'observation de remplacement ou supplémentaire lorsque la porte 1 est munie du dôme 17. Il est également possible de munir l'aéronef d'une ou plusieurs portes 1 à différents endroits du fuselage. Par exemple, on peut munir une partie basse du fuselage d'une telle porte 1. Par partie basse, on entend partie dirigée vers le sol. Ainsi, si l'encadrement 2 est muni d'un dôme d'observation 17, il est possible d'observer ce qu'il se passe au sol lorsque l'aéronef est dans les airs

La porte 1 peut avoir selon les besoins une cinématique d'ouverture variable. Par exemple, il est possible de prévoir que l'ouverture de la porte 1, par mise en rotation de la porte 1 autour de l'axe de rotation R1, se fasse depuis l'extérieur du fuselage. Dans ce cas, la charnière 10 est montée sur la paroi externe du fuselage, comme cela est représenté sur la figure 2. Dans un autre exemple de réalisation de l'invention, il est possible de prévoir une ouverture intérieure de la porte 1. C'est-à-dire que le débattement de la porte 1 autour de l'axe de rotation R1 se fait à l'intérieur du fuselage, la charnière 10 est alors solidaire d'une paroi interne de fuselage. On peut également prévoir des cols de cygne ou des moyens équivalents positionnés de façon à permettre un libre accès extérieur et des bonnes conditions d'évacuation de secours. Il est également possible de prévoir une charnière intérieure permettant de faire pivoter la porte 1 afin de la retourner dans le but de pouvoir obturer le dispositif d'observation par l'intérieur grâce à une tôle de fermeture ou par un autre équipement, l'ensemble pouvant s'effacer de l'ouverture pour permettre une évacuation.

Il est possible de prévoir que la porte 1 soit munie d'un dispositif d'éjection permettant de rendre la porte éjectable quand des conditions extrêmes l'exigent.

La porte 1 peut être une porte de type bouchon. Des charges de pression sont alors reprises par les moyens d'articulation 10 de la porte 1 sur le fuselage de l'aéronef. On prévoit des moyens de verrouillage disposés, par exemple, à l'opposé des moyens d'articulation 10, afin de verrouiller l'encadrement 2 sur le fuselage. Les moyens de verrouillage peuvent être par exemple sécurisés par des arcs-boutements. On peut par ailleurs prévoir des moyens d'étanchéité de l'intérieur du fuselage, tels que des joints d'étanchéité disposés entre l'encadrement 2 et la paroi du fuselage

## Revendications

1. Porte (1) pour aéronef, apte à obturer une ouverture ménagée sur un fuselage de l'aéronef, la porte comportant un encadrement (2) relié au fuselage par des moyens d'articulation (3), **caractérisée en ce que** l'encadrement est monté en rotation (11, 12) sur les moyens d'articulation de manière à pouvoir appliquer différentes faces de l'encadrement contre la paroi du fuselage.

2. Porte selon la revendication 1, **caractérisée en ce qu**'elle est apte à prendre deux positions stables opposées, par rotation de 180° autour des moyens d'articulation.

3. Porte selon la revendication 2, **caractérisée en ce qu'**elle comporte des moyens de verrouillage (20) de l'encadrement, dans l'une ou l'autre des positions stables.

4. Porte selon l'une des revendications 1 à 3, **caractérisée en ce qu**'une première face (15) de l'encadrement est munie d'un dôme d'observation (17), une deuxième face (14) comportant un orifice (16) d'accès au dôme.

5. Porte selon la revendication 4, **caractérisée en ce qu**'elle comporte des moyens d'obturation (18, 19) de l'orifice d'accès sur la deuxième face.

6. Porte selon la revendication 5, **caractérisée en ce que** les moyens d'obturation comportent au moins une glissière (19) ménagée sur l'encadrement à l'endroit de la deuxième face dudit encadrement et une plaque (18) apte à coulisser dans la glissière.

7. Porte selon l'une des revendications 4 à 6, **caractérisée en ce que** le dôme est amovible.

8. Porte selon l'une quelconque des revendications 1 à 7, **caractérisée en ce qu**'elle obture une ouverture ménagée à l'endroit d'un cockpit de l'aéronef.

9. Porte selon l'une des revendications 1 à 8, **caractérisée en ce que** les moyens d'articulation comportent deux bras d'articulation (4, 5) et au moins une charnière (10) solidaire du fuselage, une première extrémité (6, 7) de chaque bras étant montée en rotation sur l'encadrement et une deuxième extrémité (8, 9) de chaque bras étant montée en rotation sur la charnière.

10. Porte selon la revendication 9, **caractérisée en ce que** les moyens d'articulation comportent deux charnières solidaires du fuselage, la deuxième extrémité de chaque bras étant montée en rotation sur une charnière.

11. Porte selon l'une quelconque des revendications 1 à 10, **caractérisée en ce que** les moyens d'articulation comportent des charnières extérieures (10).

12. Porte selon l'une quelconque des revendications 1 à 10, **caractérisée en ce que** les moyens d'articulation comportent des charnières intérieures.

13. Aéronef **caractérisé en ce qu'**il comporte au moins une porte (1) selon l'une des revendications 1 à 12.

## Claims

1. Door (1) for aircraft, capable of sealing an opening in an aircraft fuselage, the door being comprised of a frame (2) connected to the door by articulation mechanisms (3), whereby the frame is assembled to rotate (11, 12) around the articulation mechanisms such that different faces of the frame can lie flush with the wall of the fuselage.

2. Door as set forth in claim 1, wherein the door is capable of assuming two opposite stable positions, by rotation through 180° around the articulation mechanisms.

3. Door as set forth in claim 2, wherein the door comprises mechanisms for locking (20) the frame in either of the stable positions.

4. Door as set forth in one of the claims 1 to 3, wherein a first face (15) of the frame is fitted with an observation dome (17), a second face (14) comprising an opening (16) to provide access to the dome.

5. Door as set forth in claim 4, wherein the door has mechanisms for sealing (18, 19) the opening on the second face.

6. Door as set forth in claim 5, wherein the sealing mechanisms comprise at least one slide rail (19) fitted on the door at the position of the second face of said frame and a plate (18) capable of sliding in the slide rail.

7. Door as set forth in one of the claims (4) to (6), wherein the dome is removable.

8. Door as set forth in any of the claims 1 to 7, wherein the door seals an opening in an aircraft cockpit.

9. Door as set forth in any of the claims 1 to 8, wherein the articulation mechanisms comprise two articulation arms (4, 5) and at least one hinge (10) integral with the fuselage, a first extremity (6, 7) of each arm being assembled in rotation on the frame and a second extremity (8, 9) of each arm being assembled to rotate around the hinge.

10. Door as set forth in claim 9, wherein the articulation mechanisms comprise two hinges integral with the fuselage, the second extremity of each arm being assembled to rotate around a hinge.

11. Door as set forth in any of the claims 1 to 10, wherein the articulation mechanisms include external hinges (10).

12. Door as set forth in any of the claims 1 to 10, wherein the articulation mechanisms comprise interior hinges.

13. Aircraft wherein the aircraft comprises at least one door (1) as set forth in one of the claims 1 to 12.

## Patentansprüche

1. Tür (1) für Luftfahrzeuge, mit welcher eine auf dem Rumpf des Luftfahrzeugs angebrachte Öffnung verschlossen werden kann, wobei die Tür einen Rahmen (2) besitzt, der durch Gelenke (3) mit dem Rahmen (2) verbunden ist, **dadurch gekennzeichnet, dass** der Rahmen auf Gelenken drehend (11, 12) angebracht ist, sodass jede beliebige Seite des Rahmens an dem Rumpf anliegen kann.

2. Tür nach Anspruch 1, **dadurch gekennzeichnet, dass** sie durch eine Drehung um 180° um die Gelenke zwei gegenseitige feste Positionen einnehmen kann.

3. Tür nach Anspruch 2, **dadurch gekennzeichnet, dass** sie Mittel zum Verriegeln (20) des Rahmens in der einen oder anderen festen Position besitzt.

4. Tür nach einem der Ansprüche 1 bis 3, **dadurch gekennzeichnet, dass** eine erste Seite (15) des Rahmens mit einer Beobachtungskuppel (17) versehen ist und eine zweite Seite (14) mit einer Öffnung (16) für einen Zugang zu der Kuppel.

5. Tür nach Anspruch 4, **dadurch gekennzeichnet, dass** sie auf der zweiten Seite Mittel zum Verschluss (18, 19) der Öffnung besitzt.

6. Tür nach Anspruch 5, **dadurch gekennzeichnet, dass** die Mittel zum Verschluss auf dem Rahmen an der Stelle der zweiten Seite des besagten Rahmens mindestens eine Gleitschiene (19) und eine Platte (18) besitzen, in welche die Gleitschiene eingeschoben werden kann.

7. Tür nach einem der Ansprüche 4 bis 6, **dadurch gekennzeichnet, dass** die Kuppel abgenommen werden kann.

8. Tür nach einem der Ansprüche 1 bis 7, **dadurch gekennzeichnet, dass** sie eine an der Stelle eines Cockpits des Luftfahrzeugs angebrachte Öffnung verschließt.

9. Tür nach einem der Ansprüche 1 bis 8, **dadurch gekennzeichnet, dass** die Gelenke zwei Gelenkarme (4, 5) und mindestens ein fest an dem Rumpf angebrachtes Scharnier (10) besitzen, wobei ein erstes Ende (6, 7) jedes Arms drehend auf dem Rahmen und ein zweites Ende (8, 9) jedes Arms drehend auf dem Scharnier angebracht ist.

10. Tür nach Anspruch 9, **dadurch gekennzeichnet, dass** die Gelenke zwei fest an den Rumpf angebrachte Scharniere besitzen und das zweite Ende jedes Arms drehend auf einem Scharnier angebracht ist.

11. Tür nach einem der Ansprüche 1 bis 10, **dadurch gekennzeichnet, dass** die Gelenke äußere Scharniere (10) besitzen.

12. Tür nach einem der Ansprüche 1 bis 10, **dadurch gekennzeichnet, dass** die Gelenke innere Scharniere besitzen.

13. Luftfahrzeug, **dadurch gekennzeichnet, dass** es mindestens eine Tür (1) nach einer der Anforderungen 1 bis 12 besitzt.
